Europäisches Patentamt

European Patent Office

Office européen des brevets

(19)

(11) Veröffentlichungsnummer : **0 121 165 B1**

# EUROPÄISCHE PATENTSCHRIFT

(12)

(45) Veröffentlichungstag der Patentschrift :
28.05.86

(21) Anmeldenummer : 84102926.7

(22) Anmeldetag : 16.03.84

(51) Int. Cl.⁴ : **B 60 R 25/02**

(54) **Lenkradschloss.**

(30) Priorität : 25.03.83 FR 8304897

(43) Veröffentlichungstag der Anmeldung :
10.10.84 Patentblatt 84/41

(45) Bekanntmachung des Hinweises auf die Patenterteilung : 28.05.86 Patentblatt 86/22

(84) Benannte Vertragsstaaten :
DE GB IT

(56) Entgegenhaltungen :
FR-A-   503 503
GB-A-   304 826

(73) Patentinhaber : **NEIMAN S.A.**
**39, Avenue Marceau**
**F-92400 Courbevoie (FR)**

(72) Erfinder : **Lipschütz, Paul**
**12, rue Maurice Berteaux**
**F-78290 Croissy (FR)**

(74) Vertreter : **Patentanwaltsbüro Cohausz & Florack**
**Schumannstrasse 97**
**D-4000 Düsseldorf 1 (DE)**

EP 0 121 165 B1

## Beschreibung

Die Erfindung betrifft ein Lenkradschloß für Automobile, mit einem Sperriegel, der mit einer radialen Ausnehmung in einer mit der Lenkradwelle verbundenen Hülse zusammenwirkt.

Lenkradschlösser bekannter Art, die seit Jahrzehnten zufriedenstellend in Gebrauch sind, haben dessen ungeachtet verschiedene Nachteile, die den Gebrauch erschweren. Zunächst befindet sich der Riegel praktisch niemals in Flucht mit der Ausnehmung in der Hülse, so daß eine Rückholfeder für den Riegel vorgesehen werden muß, wodurch die Konstruktion komplizierter und anfälliger wird. Auch muß der Benutzer nach dem Abstellen des Motors das Lenkrad drehen, um den Riegel zum Einrasten zu bringen. Dieser Vorgang erfordert einen nicht unerheblichen Kraftaufwand, besonders wenn die Lenkung mit einer Servounterstützung versehen ist, die bei abgestelltem Motor nicht funktioniert.

Darüber hinaus ist es beim Entriegeln des Lenkradschlosses oft notwendig, auf das Lenkrad ein Drehmoment auszuüben, das recht beträchtlich sein kann ; wenn ein Rad an einer Bürgersteigkante anstößt. Außerdem eignen sich die bekannten Vorrichtungen schlecht für eine Betätigung des Riegels durch eine elektrische, pneumatische oder hydraulische Vorrichtung, vor allem wegen der oft erforderlichen Entriegelungskraft.

Man hat deshalb schon versucht, Lenkradschlösser der vorstehend beschriebenen Art durch Hilfsmittel zu ersetzen, die eine Verriegelung der Lenkradwelle in allen Stellungen ermöglichen. Diese Vorrichtungen sind jedoch unausgereift und/oder kompliziert, so daß sie nur beschränkte Anwendung gefunden haben.

Es stellte sich daher die Aufgabe, ein neuartiges Lenkradschloß zur Verfügung zu stellen, das die gleiche Einfachheit und Zuverlässigkeit wie das Lenkradschloß der eingangs beschriebenen Art aufweist, jedoch zuverlässig in allen Stellungen der Lenkradwelle verriegelt und dessen Riegel mit geringem Kraftaufwand herausgezogen werden kann.

Erfindungsgemäß wird diese Aufgabe dadurch gelöst, daß die erwähnte Hülse hohl ist und über ihren ganzen Umfang einen äußeren Spalt aufweist, daß sich im Innern des so gebildeten Sitzes eine Anzahl drehbarer Bauteile und ein mit der Hülse verbundener Anschlag befinden, daß die Gesamtheit von drehbaren Bauteilen und Anschlag nicht den gesamten Umfangsraum des Sitzes einnimmt und daß der Sperriegel eine Entriegelungsstellung, in der er sich völlig außerhalb der Hülse befindet, sowie eine Verriegelungsstellung, in der er durch den Umfangsspalt in den Sitz eindringt, einnehmen kann.

An Hand der Zeichnungen wird die Erfindung näher erläutert. Es zeigen :

Figur 1 eine schematische Ansicht, teilweise im Axialschnitt, einer mit einem Ausführungsbeispiel der Erfindung ausgerüsteten Steuersäule ;

Figur 2 eine Teilschnittansicht längs der Linie A-B in Figur 1 ; und

Figur 3 eine Ansicht einer Einzelheit von Figur 2 in vergrößertem Maßstab.

Die Steuersäule enthält in bekannter Weise die Lenkradwelle 2, auf der eine Hülse 3 aufgeschweißt ist. Die Hülse 3 ist erfindungsgemäß hohl und weist am Umfang einen durchgehenden Spalt 3' auf. Im Innern des in die Hülse 3 eingearbeiteten Sitzes sind Rollen 4 sowie eine mit der Hülse 3 fest verbundene Rolle 4' angeordnet, die einen Anschlag für die losen Rollen 4 bildet. Die Rollen 4 und 4' nehmen nicht den gesamten Umfangsraum ein, der ihnen in der Aussparung der Hülse 3 zur Verfügung steht.

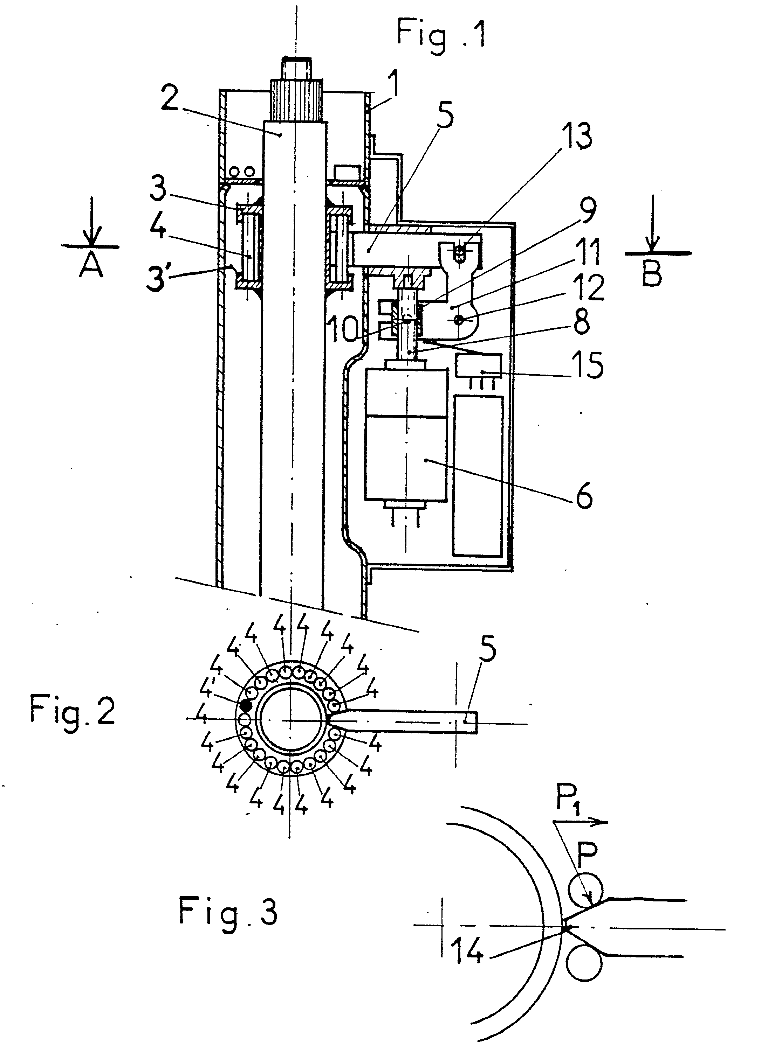

An der Welle 2 ist rechtwinklig zu ihrer Achse gegenüber dem Spalt 3' in der Hülse 3 gleitbar ein Riegel 5 angebracht, der eine in den Figuren 1 bis 3 dargestellte Verriegelungsstellung einnehmen kann, in der er durch den Spalt 3' in das Innere der Hülse 3 eindringt, wobei er die benachbarten losen Rollen 4 dank des zwischen ihnen vorhendenen freien Raumes beiseite schiebt. Jeder Versuch einer Drehung der Welle 2 in dem einen oder anderen Sinne bewirkt ein Aneinanderpressen der Rollen 4, die sich zwischen dem Riegel 5 und der feststehenden Rolle 4' befinden, wodurch die Welle 2 blockiert wird. Das Gesamtspiel der Rollen 4 kann kaum größer als die Breite des Riegels 5 sein, so daß die Welle 2 praktisch ohne jedes Spiel blockiert wird.

Der Riegel 5 wird von einem Antriebsorgan 6 betätigt, das aus einem elektrischen Getriebemotor, einem Elektromagneten, einem Druckluftmotor oder dergleichen bestehen kann. Das Antriebsorgan 6 hat eine abgestifte Abtriebswelle 8, die mit einer Schraube 9 zusammenwirkt, die an einem Zapfen 10 befestigt ist. Der Zapfen 10 wirkt mit einer Gabel am Ende eines Hebels 11 zusammen, der um eine Achse 12 verschwenkt werden kann. Am anderen Ende des Hebels 11 befindet sich eine Gabel, die mit einer Achse 13 zusammenwirkt, die an dem Riegel 5 befestigt ist. Ein Grenzschalter 15 begrenzt die Bewegung der Nutenwelle 8 und damit den Weg des Riegels 5.

Das Antriebsorgan 6 kann selbstverständlich durch ein mechanisches Schloßsystem ersetzt werden, das die Verschiebung des Riegels 5 durch einen Nocken steuert und vorzugsweise von einer elektrischen Fernsteuerungsvorrichtung betätigt wird.

Die Rollen 4 können durch entsprechende andere drehbare Bauteile, wie Kugeln oder Nadeln, ersetzt werden.

Das Ende 14 des Sperriegels, das in den Spalt 3' der Hülse 3 eindringt, ist vorzugsweise etwas angespitzt, um ein Zurückweichen des Riegels 5 zu verhindern, wenn eine Kraft P (Figur 3), die auf die Welle 2 ein Moment ausübt, auf ihn einwirkt, etwa bei dem Versuch, das Schloß zu sprengen.

Im Gegenteil, die radiale Komponente P$_1$ einer solchen Kraft P, die normalerweise durch den Druck der Rollen 4 auf den Riegel 5 ausgeübt wird, erleichtert das Herausziehen des Riegels 5 durch das Antriebsorgan 6.

Ganz gleich, welche Winkelstellung die Lenkradwelle 2 im Augenblick der Verriegelung einnimmt — die Spitze 14 des Riegels 5 verdrängt die Rollen 4 nach der einen oder anderen Seite, wegen der Rollbewegung dieser Rollen praktisch ohne jeden Kraftaufwand. Wenn sich der Riegel 5 gegenüber der feststehenden Rolle 4' befindet, drängt seine Spitze 15 alle Rollen 4 gegen die gegenüberliegende Seite der feststehenden Rolle 4'. Wie erwähnt, wird das Herausziehen des Riegels 5, für das praktisch keine Kraft aufzuwenden ist, noch durch die Komponente P$_1$ des Druckmomentes P der Rollen 4 erleichtert.

## Patentansprüche

1. Lenkradschloß für ein Automobil, mit einem Sperriegel (5), der mit mindestens einer radialen Aussparung in einer mit der Lenkradwelle verbundenen Hülse (3) zusammenwirkt, dadurch gekennzeichnet, daß

die Hülse (3) hohl ist und über ihren ganzen Umfang einen äußeren Spalt (3') aufweist,

sich im Innern des so gebildeten Sitzes eine Anzahl frei drehbarer Bauteile (4) und ein Anschlag (4') befinden,

die Gesamtheit von drehbaren Bauteilen (4) und Anschlag (4') nicht den gesamten Umfangsraum des Sitzes einnimmt und

der Sperriegel (5) eine Entriegelungsstellung, in der er sich völlig außerhalb der Hülse (3) befindet, sowie eine Verriegelungsstellung, in der er durch den Umfangsspalt (3') in den Sitz eindringt, einnehmen kann.

2. Schloß nach Anspruch 1, dadurch gekennzeichnet, daß die frei drehbaren Bauteile lose Rollen (4) sind.

3. Schloß nach Anspruch 1, dadurch gekennzeichnet, daß die frei drehbaren Bauteile Kugeln sind.

4. Schloß nach Anspruch 1, dadurch gekennzeichnet, daß die frei drehbaren Bauteile Nadeln sind.

5. Schloß nach einem der Ansprüche 1 bis 4, dadurch gekennzeichnet, daß der Anschlag (4') eine abgerundete Umfangsfläche hat.

6. Schloß nach einem der Ansprüche 1 bis 5, dadurch gekennzeichnet, daß das der Hülse (3) zugewandte Ende des Sperriegels (5) eine lange Spitze (14) aufweist.

7. Schloß nach einem der Ansprüche 1 bis 6, dadurch gekennzeichnet, daß der Sperriegel (5) mit Hilfe eines Antriebsorgans (6) betätigbar ist.

8. Schloß nach Anspruch 7, dadurch gekennzeichnet, daß das Antriebsorgan (6) eine elektrische Fernsteuerungseinrichtung ist.

9. Schloß nach einem der Ansprüche 1 bis 6, dadurch gekennzeichnet, daß der Sperriegel (5) von einem Schloß betätigt wird.

## Claims

1. Steering wheel lock for an automobile, having a locking bolt (5) which co-operates with at least one radial aperture in a sleeve (3) connected with the steering wheel shaft, characterised in that

the sleeve (3) is hollow and has an external gap (3') over its entire circumference,

a number of freely rotatable components (4) and a stop (4') are situated in the interior of the seating thus formed,

the entirety of rotatable components (4) and stop (4') does not occupy the whole circumferential space of the seating, and

the locking bolt (5) can occupy an unlocking position, in which it is situated entirely outside the sleeve (3), and a locking position in which it penetrates through the circumferential gap (3') into the seating.

2. Lock according to Claim 1, characterised in that the freely rotatable components are loose rollers (4).

3. Lock according to Claim 1, characterised in that the freely rotatable components are balls.

4. Lock according to Claim 1, characterised in that the freely rotatable components are needles.

5. Lock according to one of Claims 1 to 4, characterised in that the stop (4') has a rounded-off circumferential surface.

6. Lock according to one of Claims 1 to 5, characterised in that the end of the locking bolt (5) turned towards the sleeve (3) has a long point (14).

7. Lock according to one of Claims 1 to 6, characterised in that the locking bolt (5) is actuatable with the aid of a drive element (6).

8. Lock according to Claim 7, characterised in that the drive element (6) is an electric remote control device.

9. Lock according to one of Claims 1 to 6, characterised in that the locking bolt (5) is actuated by a lock.

## Revendications

1. Antivol de direction pour véhicule automobile du type comprenant un pêne de verrouillage (5) coopérant avec au moins un évidement radial d'un manchon (3) solidaire de l'arbre de direction, caractérisé par le fait que

ledit manchon (3) est creux et comporte une fente externe (3') sur toute sa périphérie,

l'intérieur du logement ainsi formé dans le manchon (3) contenant une pluralité d'organes rotatifs libres (4) et une butée (4'),

l'ensemble des organes rotatifs (4) et de la butée (4') n'occupant pas la totalité de l'espace circonférentiel du logement,

le pêne de verrouillage (5) pouvant occuper une position de déverrouillage dans laquelle il est totalement à l'extérieur dudit manchon (3) et une position de verrouillage dans laquelle il pénètre dans ledit logement du manchon (3) à travers ladite fente périphérique (3').

2. Antivol selon la revendication 1, caractérisé par le fait que les organes rotatifs libres sont des rouleaux fous (4).

3. Antivol selon la revendication 1, caractérisé par le fait que les organes rotatifs libres sont des billes.

4. Antivol selon la revendication 1, caractérisé par le fait que les organes rotatifs libres sont des aiguilles.

5. Antivol selon l'une des revendications 1 à 4, caractérisé par le fait que la butée (4') a une surface périphérique arrondie.

6. Antivol selon l'une des revendications 1 à 5, caractérisé par le fait que l'extrémité du pêne (5) en regard du manchon (3) présente une pointe allongée (14).

7. Antivol selon l'une des revendications 1 à 6, caractérisé par le fait que le pêne de verrouillage (5) peut être actionné au moyen d'un actionneur (6).

8. Antivol selon la revendication 7, caractérisé par le fait que l'actionneur (6) est un dispositif à télécommande électrique.

9. Antivol selon l'une des revendications 1 à 6, caractérisé par le fait que le pêne de verrouillage (5) est commandé par une serrure.

0 121 165

Fig .1

Fig.2

Fig.3